# EUROPÄISCHE PATENTANMELDUNG

(11) **EP 1 694 022 A1**
(43) Veröffentlichungstag der Anmeldung: **23.08.2006**
(21) Anmeldenummer: 05003314.1
(22) Anmeldetag: 16.02.2005
(51) Int. Cl.: H04L 29/06, B60R 16/02

(54) **Lokales Netzwerk für Fahrzeuge**

(71) Anmelder: Delphi Technologies, Inc., Troy, MI 48007 (US)
(72) Erfinder: Larisch, Markus, 46514 Schermbeck (DE); Bego-Ghina, Rainer, 44791 Bochun (DE); Krause, Harald, 45525 Hattingen (DE)
(74) Vertreter: Manitz, Finsterwald & Partner GbR

(57) **Zusammenfassung**

Ein lokales Netzwerk, insbesondere für Fahrzeuge umfasst wenigstens einen Master und mehrere Slaves, die durch den Master über einen Datenbus ansteuerbar sind, wobei zumindest ein Slave in einem ungeschützten Bereich, z.B. außen am Fahrzeug, und zumindest ein Slave in einem geschützten Bereich, z.B. innerhalb des Fahrzeugs, angeordnet ist. Dabei sind von einem jeweiligen Slave im ungeschützten Bereich ausgehende Daten über den Datenbus zwar zum Master, jedoch nicht zu irgendeinem Slave im geschützten Bereich übertragbar.

## Beschreibung

Die Erfindung betrifft ein lokales Netzwerk, insbesondere für Fahrzeuge, mit wenigstens einem Master und mehreren Slaves, die durch den Master über einen Datenbus ansteuerbar sind, wobei zumindest ein Slave in einem ungeschützten Bereich, z.B. außen am Fahrzeug, und zumindest ein Slave in einem geschützten Bereich, z.B. innerhalb des Fahrzeugs, angeordnet ist.

Insbesondere in Fahrzeugen werden zunehmend so genannte LIN-(Local Interconnect Network)-Datenbusse eingesetzt, die jeweils zwischen einer Zentraleinheit (Master) und mehreren Steuereinheiten (Slaves) vorgesehen sind und beispielsweise der Übertragung von Befehlen zum Öffnen und Schließen des Fahrzeugs usw. dienen. Dabei ist ein jeweiliger Befehl auf dem gesamten Datenbus verfügbar. Bei dem Datenbus handelt es sich nun aber um eine elektrische Leitung, die vor Manipulationen von außen geschützt werden muss. So stellt insbesondere das Herausführen eines Datenbusses aus einem Fahrzeug (beispielsweise zu einem Außenspiegel) ein Sicherheitsrisiko dar. Von einem solchen ungeschützten, von außen zugänglichen Bereich des Datenbusses aus können nämlich nicht autorisierte Befehle eingebracht werden. Man könnte nun zwar z.B. für die Spiegelverstellung einen gesonderten Datenbus verwenden oder die Daten verschlüsseln. Solche Lösungen wären jedoch relativ kostenaufwändig.

Der Erfindung liegt die Aufgabe zugrunde, ein verbessertes Netzwerk der eingangs genannten Art zuschaffen, bei dem der Datenbus bei möglichst geringem Aufwand und damit entsprechend kostengünstig gegen vom nicht geschützten Bereich ausgehende Manipulationen zuverlässig geschützt ist.

Diese Aufgabe wird erfindungsgemäß dadurch gelöst, dass von einem jeweiligen Slave im ungeschützten Bereich ausgehende Daten über den Datenbus zwar zum Master, jedoch nicht zu irgend einem Slave im geschützten Bereich übertragbar sind.

Aufgrund dieser Ausbildung ist ausgeschlossen, dass von einem jeweiligen Slave im ungeschützten Bereich ausgehende Daten zu irgendeinem Slave im geschützten Bereich übertragen werden. Vom nicht geschützten Bereich ausgehende Manipulationen werden damit auf einfache und zuverlässige Weise unterbunden.

Unabhängig davon, ob ein jeweiliger Slave im ungeschützten oder im geschützten Bereich angeordnet ist, ist zwischen dem Slave und dem Master bevorzugt jeweils ein bidirektionaler Datenverkehr möglich.

Der Datenfluss zwischen dem Master und den verschiedenen Slaves kann zweckmäßigerweise über eine logische, insbesondere digitale Verknüpfungsschaltung steuerbar sein. Dabei ist diese logische Verknüpfungsschaltung so ausgelegt, dass ein Datenfluss ausgehend von einem jeweiligen Slave im ungeschützten Bereich zu irgendeinem Slave im geschützten Bereich ausgeschlossen ist.

Bevorzugt ist die logische Verknüpfungsschaltung jeweils über einem Transceiver mit dem Master, einem oder mehreren Slaves im geschützten Bereich und einem oder mehreren Slaves im ungeschützten Bereich gekoppelt. Es ist also beispielsweise eine Anordnung aus drei Transceivern und einer logischen Verknüpfung denkbar, die die Nachrichten entsprechend weiterleitet bzw. einen Datenfluss von einem jeweiligen Slave im ungeschützten Bereich zu irgendeinem Slave im geschützten Bereich unterbindet.

Eine äußerst einfache zweckmäßige Ausführungsform des erfindungsgemäßen lokalen Netzwerks zeichnet sich dadurch aus, dass der Master über eine elektronische Schaltung einerseits mit wenigstens einem Slave im geschützten Bereich und andererseits mit wenigstens einem Slave im ungeschützten Bereich verbunden ist und dass die elektronische Schaltung so ausgelegt ist, dass ein Datenfluss ausgehend von einem jeweiligen Slave im ungeschützten Bereich zu irgend einem Slave im geschützten Bereich ausgeschlossen ist.

Sieht man davon ab, dass keine Slave-zu-Slave-Kommunikation vom ungeschützten zum geschützten Bereich erfolgen darf, kann auch eine solche Lösung beispielsweise wieder die Bedingungen bezüglich des LIN-Protokolls 2.0 erfüllen. Der Aufwand ist minimal, was entsprechend niedrige Kosten mit sich bringt, zumal die elektronische Schaltung zweckmäßigerweise in einem Stecker integriert sein kann.

Der Datenbus kann insbesondere ein Eindraht-Bussystem umfassen.

Bei einer bevorzugten praktischen Ausführungsform des erfindungsgemäßen lokalen Netzwerks ist als Datenbus ein LIN (Local Interconnect Network)-Datenbus vorgesehen.

Die Erfindung wird im Folgenden anhand von Ausführungsbeispielen unter Bezugnahme auf die Zeichnung näher erläutert; in dieser zeigen:
- Fig. 1: ein Funktionsdiagramm einer beispielhaften Ausführungsform eines lokalen Netzwerks,
- Fig. 2: ein vereinfachtes Schaltschema einer beispielhaften Ausführungsform des lokalen Netzwerks und
- Fig. 3: ein vereinfachtes Schaltschema einer weiteren beispielhaften Ausführungsform des lokalen Netzwerks.

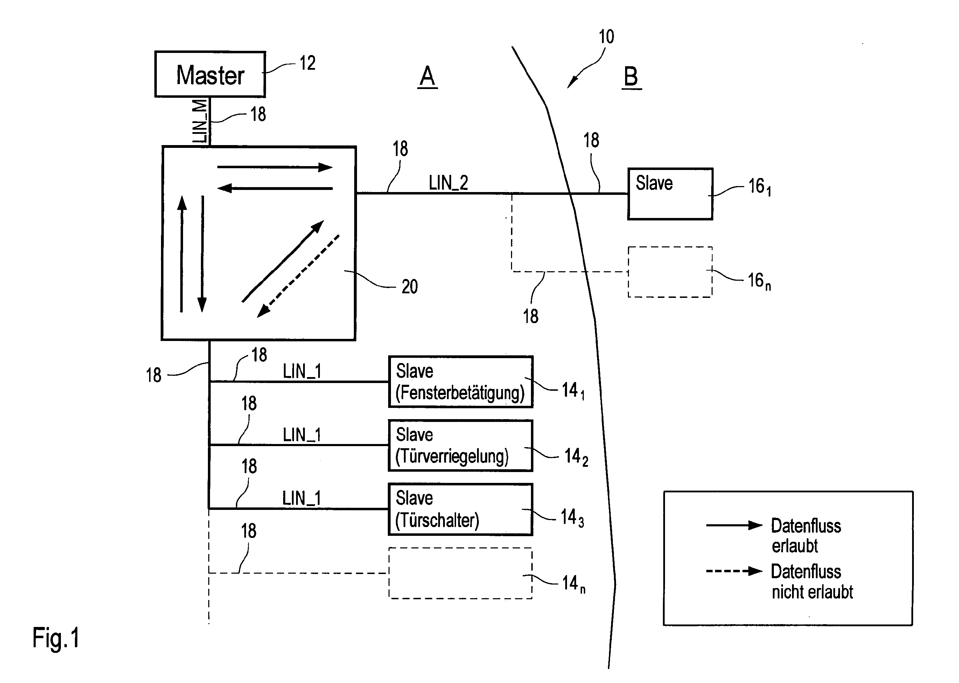

Fig. 1 zeigt ein Funktionsdiagramm einer beispielhaften Ausführungsform des erfindungsgemäßen lokalen Netzwerks, wobei es sich im vorliegenden Fall beispielsweise um ein lokales Netzwerk für Fahrzeuge handelt.

Dieses umfasst wenigstens einen Master und mehrere Slaves 14ᵢ, 16ᵢ. Die Slaves 14ᵢ, 16ᵢ sind durch den Master 12 über einen Datenbus 18 ansteuerbar, der im vorliegenden Fall beispielsweise als LIN-(Local Interconnect Network)-Datenbus vorgesehen ist.

Wie anhand der Fig. 1 zu erkennen ist, ist zumindest ein Slave 14ᵢ in einem geschützten Bereich A, hier beispielsweise innerhalb des Fahrzeugs, und zumindest ein Slave 16ᵢ in einem ungeschützten Bereich B, hier beispielsweise außen am Fahrzeug, vorgesehen.

Als im geschützten Bereich A vorgesehene Slaves 14ᵢ sind in der Fig. 1 beispielsweise ein Slave 14₁ für die Fensterbetätigung, ein Slave 14₂ für die Türverriegelung und ein Slave 14₃ für die Türschalter angedeutet. Grundsätzlich können auch weitere und/oder andere im ungeschützten Bereich A angeordnete Slaves 14ᵢ vorgesehen sein.

Als im ungeschützten Bereich B angeordneter Slave 16ᵢ ist in der Fig. 1 ein Slave 16₁ für den Außenspiegel angedeutet, wobei für zwei Außenspiegel jeweils ein solcher im ungeschützten Bereich B angeordneter Slave 16ᵢ vorgesehen sein kann. In der Fig. 1 ist ein zweiter im ungeschützten Bereich B angeordneter Slave 16ₙ durch gestrichelte Linien angedeutet.

Das lokale Netzwerk 10 ist nun so ausgelegt, dass von einem jeweiligen Slave 16ᵢ im ungeschützten Bereich B ausgehende Daten über den LIN-Datenbus 18 zwar zum Master 12, jedoch nicht zu irgendeinem Slave 14ᵢ im geschützten Bereich A übertragbar sind.

Unabhängig davon, ob ein jeweiliger Slave 16ᵢ, 14ᵢ im ungeschützten oder im geschützten Bereich B bzw. A angeordnet ist, ist zwischen dem Slave 16ᵢ, 14ᵢ und dem Master 12 jeweils ein bidirektionaler Datenverkehr möglich.

Die entsprechende Steuerung des Datenflusses ist in der Fig. 1 durch in einem Block 20 zwischen dem Master 12 und den Slaves 14ᵢ, 16ᵢ enthaltene Pfeile angedeutet. Dabei geben die durchgehenden Pfeile an, dass in der betreffenden Richtung ein ungehinderter Datenfluss möglich ist, während mit dem gepunkteten Pfeil zum Ausdruck gebracht wird, dass in der betreffenden Richtung kein Datenfluss möglich ist. Danach ist also zwischen dem Master 12 und den im geschützten Bereich A angeordneten Slaves 14ᵢ sowie zwischen dem Master 12 und den im ungeschützten Bereich B angeordneten Slaves 16ᵢ jeweils ein bidirektionaler Datenaustausch möglich. Zudem ist beispielsweise auch ein Datenaustausch ausgehend von den im geschützten Bereich A angeordneten Slaves 14ᵢ zu den im ungeschützten Bereich B angeordneten Slaves 16ᵢ zulässig. Ein Datenaustausch ausgehend von den im ungeschützten Bereich B angeordneten Slaves 16ᵢ zu den im geschützten Bereich A angeordneten Slaves 14ᵢ ist dagegen ausgeschlossen (vgl. den gepunkteten Pfeil).

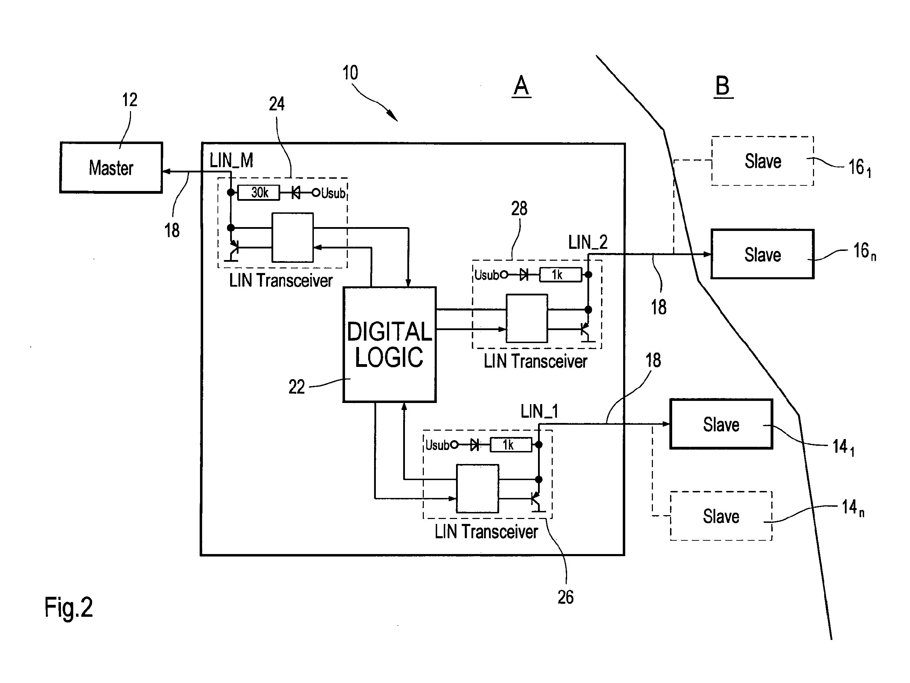

Bei dem in der Fig. 2 wiedergegebenen Ausführungsbeispiel ist der Datenfluss zwischen dem Master 12 und den verschiedenen Slaves 14ᵢ, 16ᵢ über eine logische, insbesondere digitale Verknüpfungsschaltung 22 steuerbar. Dabei ist diese logische Verknüpfungsschaltung 22 so ausgelegt, dass ein Datenfluss ausgehend von einem jeweiligen Slave 16ᵢ im ungeschützten Bereich B zu irgendeinem Slave 14ᵢ im geschützten Bereich A ausgeschlossen ist.

Wie anhand der Fig. 2 zu erkennen ist, ist die logische Verknüpfungsschaltung 22 im vorliegenden Fall jeweils über einen Transceiver 24, 26 bzw. 28 mit dem Master 12, einem oder mehreren Slaves 14ᵢ im geschützten Bereich A und einem oder mehreren Slaves 16ᵢ im ungeschützten Bereich B gekoppelt. Bei den Transceivern 24 - 28 handelt es sich im vorliegenden Fall jeweils um einen LIN (Linear Interconnect Network)-Transceiver.

Ein Datenfluss ausgehend von einem jeweiligen Slave 16ᵢ im ungeschützten Bereich B zu irgendeinem Slave 14ᵢ im geschützten Bereich A wird im vorliegenden Fall also durch die logische, insbesondere digitale Verknüpfungsschaltung 22 verhindert. Auch im übrigen kann der Datenfluss dirch diese Verknüpfungsschaltung insbesondere wieder so gesteuert sein, wie dies im Zusammenhang mit der Fig. 1 beschrieben wurde. Auch im vorliegenden Fall ist zur Verbindung der verschiedenen Einheiten wieder ein LIN-Datenbus 18 vorgesehen.

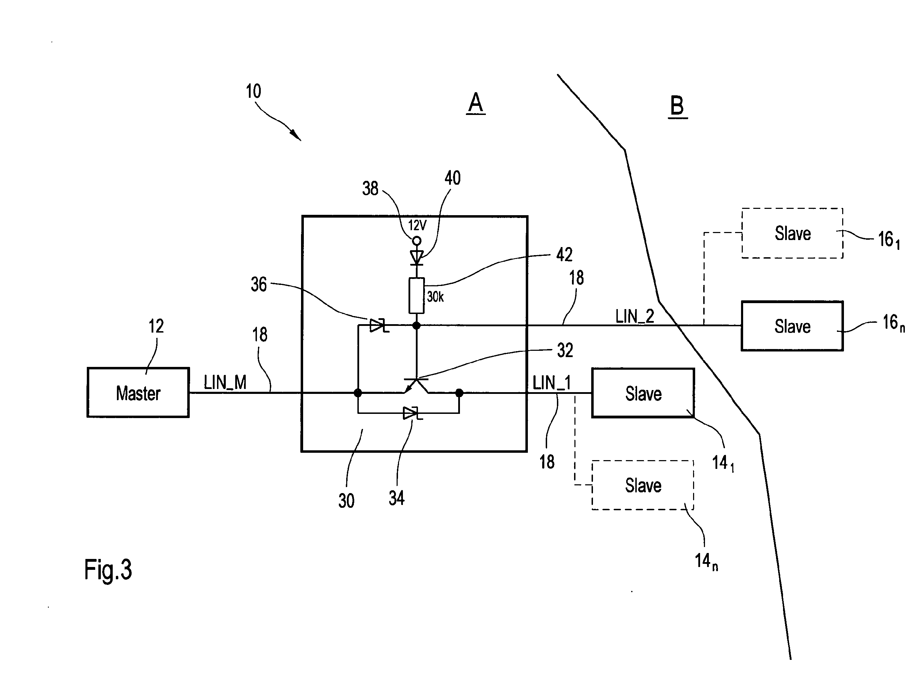

Bei dem Ausführungsbeispiel gemäß Fig. 3 ist der Master 12 über eine einfache elektronische Schaltung 30 einerseits mit wenigstens einem Slave 14ᵢ im geschützten Bereich A und andererseits mit wenigstens einem Slave 16ᵢ im ungeschützten Bereich B verbunden. Dabei erfolgt die Kopplung der verschiedenen Elemente wieder über einem LIN (Local Interconnect Network)-Datenbus.

Die elektronische Schaltung 30 ist wieder so ausgelegt, dass ein Datenfluss ausgehend von einem jeweiligen Slave 16ᵢ im ungeschützten Bereich B zu irgendeinem Slave 14ᵢ im geschützten Bereich A ausgeschlossen ist.

Die elektronische Schaltung 30 kann beispielsweise in einem Stecker integriert sein.

Wie anhand der Fig. 3 zu erkennen ist, umfasst die elektronische Schaltung 30 im vorliegenden Fall beispielsweise einen Transistor 32, hier beispielsweise einen bipolaren Transistor, dessen Kollektor/Emitter-Strecke durch eine in Sperrrichtung geschaltete Diode 34 überbrückt ist und zwischen dessen Emitter und Basis eine weitere Diode 36 in Durchlassrichtung geschaltet ist. Die positive Klemme 38 einer Spannungsversorgung (z.B. 12 V) ist über eine in Durchlassrichtung geschaltete Diode 40 und einem Widerstand 42 mit der Basis des Transistors 32 verbunden. Bedingt kann anstatt eines bipolaren Transistors beispielsweise auch ein Feldeffekttransistor oder dergleichen vorgesehen sein.

Die elektronische Schaltung 30 ist wieder über einen LIN-(Local Interconnect Network)-Datenbus 18 mit dem Master 12, den Slaves 14ᵢ im geschützten Bereich A und den Slaves 16ᵢ im ungeschützten Bereich B gekoppelt. Dabei ist der Emitter des Transistors 32 mit dem Master 12, der Kollektor des Transistors 32 mit dem oder den Slaves 14ᵢ im geschützten Bereich A und die Basis des Transistors 32 mit dem oder den Slaves 16ᵢ im ungeschützten Bereich B verbunden. Auch im übrigen kann der Datenfluss durch diese elektronische Schaltung 30 beispielsweise wieder so gesteuert sein, wie dies anhand der Figur 1 näher beschrieben wurde.

Der Block 20 in der Fig. 1 kann also beispielsweise eine logische, insbesondere digitale Verknüpfungsschaltung 22 gemäß Fig. 2 oder eine elektronische Schaltung 30 gemäß Fig. 3 umfassen. Es ist ein bidirektionaler Datenverkehr zwischen dem Master 12 und jedem Slave 14ᵢ, 16ᵢ möglich. Ein Slave 16ᵢ im ungeschützten Bereich kann nur Nachrichten zum Master 12 senden, jedoch nicht zu weiteren Slaves 14ᵢ im geschützten Bereich. Damit ist der geschützte Bereich vor Manipulationen von außen gesichert.

Die praktische Ausführungsform gemäß Fig. 2 umfasst drei LIN (Local Interconnect Network)-Transceiver 24 - 26 mit einer logischen, insbesondere digitalen Verknüpfungsschaltung 22, die die Nachrichten entsprechend weiterleitet bzw. steuert.

Das Ausführungsbeispiel gemäß Fig. 3 stellt eine einfache Lösung dar, die abgesehen davon, dass eine Slave-zu-Slave-Kommunikation vom ungeschützten zum geschützten Bereich ausgeschlossen ist, die Bedingung bezüglich des LIN-Protokolls 2.0 erfüllen kann. Angesichts des minimalen baulichen Aufwands sind die Kosten entsprechend gering, zumal die elektronische Schaltung 30 beispielsweise in einem Stecker integriert werden kann.

### Bezugszeichenliste

- 10: lokales Netzwerk
- 12: Master
- 14i: Slave im geschützten Bereich A
- 16ᵢ: Slave im ungeschützten Bereich B
- 18: Datenbus
- 20: Block
- 22: logische Verknüpfungsschaltung
- 24: Transceiver
- 26: Transceiver
- 28: Transceiver
- 30: elektronische Schaltung
- 32: Transistor
- 34: Diode
- 36: Diode
- 38: positive Klemme
- 40: Diode
- 42: Widerstand

- A: geschützter Bereich
- B: ungeschützter Bereich

## Patentansprüche

1. Lokales Netzwerk (10) insbesondere für Fahrzeuge, mit wenigstens einem Master (12) und mehreren Slaves (14ᵢ, 16ᵢ), die durch den Master (12) über einen Datenbus (18) ansteuerbar sind, wobei zumindest ein Slave (16ᵢ) in einem ungeschützten Bereich (B), z.B. außen am Fahrzeug, und zumindest ein Slave (14ᵢ) in einem geschützten Bereich (A), z.B. innerhalb des Fahrzeugs, angeordnet ist,
**dadurch gekennzeichnet ,**
**dass** von einem jeweiligen Slave (16ᵢ) im ungeschützten Bereich (B) ausgehende Daten über den Datenbus (18) zwar zum Master (12), jedoch nicht zu irgend einem Slave (14ᵢ) im geschützten Bereich (A) übertragbar sind.

2. Lokales Netzwerk nach Anspruch 1,
**dadurch gekennzeichnet ,**
**dass** unabhängig davon, ob ein jeweiliger Slave (14ᵢ, 16ᵢ) im ungeschützten oder im geschützten Bereich (B bzw. A) angeordnet ist, zwischen dem Slave (14ᵢ, 16ᵢ) und dem Master (12) jeweils ein bidirektionaler Datenverkehr möglich ist.

3. Lokales Netzwerk nach Anspruch 1 oder 2,
**dadurch gekennzeichnet ,**
**dass** der Datenfluss zwischen dem Master (12) und den verschiedenen Slaves (14ᵢ, 16ᵢ) über eine logische, insbesondere digitale Verknüpfungsschaltung (22) steuerbar ist, die so ausgelegt ist, dass ein Datenfluss ausgehend von einem jeweiligen Slave (16ᵢ) im ungeschützten Bereich (B) zu irgend einem Slave (14ᵢ) im geschützten Bereich (A) ausgeschlossen ist.

4. Lokales Netzwerk nach Anspruch 3,
**dadurch gekennzeichnet ,**
**dass** die logische Verknüpfungsschaltung (22) jeweils über einen Transceiver (24, 26 bzw. 28) mit dem Master (12), einem oder mehreren Slaves (14ᵢ) im geschützten Bereich (A) und einem oder mehreren Slaves (16ᵢ) im ungeschützten Bereich (B) gekoppelt ist.

5. Lokales Netzwerk nach Anspruch 1 oder 2,
**dadurch gekennzeichnet ,**
**dass** der Master (12) über eine elektronische Schaltung (30) einerseits mit wenigstens einem Slave (14ᵢ) im geschützten Bereich (A) und andererseits mit wenigstens einem Slave (16ᵢ) im ungeschützten Bereich (B) verbunden ist und dass die elektronische Schaltung (30) so ausgelegt ist, dass ein Datenfluss ausgehend von einem jeweiligen Slave (16ᵢ) im ungeschützten Bereich (B) zu irgend einem Slave (14ᵢ) im geschützten Bereich (A) ausgeschlossen ist.

6. Lokales Netzwerk nach Anspruch 5,
**dadurch gekennzeichnet ,**
**dass** die elektronische Schaltung (30) in einem Stecker integriert ist.

7. Lokales Netzwerk nach einem der vorhergehenden Ansprüche,
**dadurch gekennzeichnet ,**
**dass** der Datenbus (18) ein Eindraht-Bussystem umfasst.

8. Lokales Netzwerk nach einem der vorhergehenden Ansprüche,
**dadurch gekennzeichnet ,**
**dass** als Datenbus (18) ein LIN (Local Interconnect Network)-Datenbus vorgesehen ist.
